(19) **Europäisches Patentamt / European Patent Office / Office européen des brevets**

(11) **EP 3 573 371 A1**

(12) **EUROPEAN PATENT APPLICATION**

(43) Date of publication:
**27.11.2019 Bulletin 2019/48**

(51) Int Cl.:
**H04W 40/14** (2009.01)    **H04W 40/16** (2009.01)
**H04W 40/12** (2009.01)    **H04L 12/707** (2013.01)
**H04L 12/703** (2013.01)

(21) Application number: **18174137.2**

(22) Date of filing: **24.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• **LEUKE BANDARA KARUNARATNE, Samurdhi 2018 Antwerpen (BE)**
• **GACANIN, Haris 2018 Antwerpen (BE)**

(74) Representative: **IP HILLS NV Hubert Frère-Orbanlaan 329 9000 Gent (BE)**

(54) **OPTIMIZING A WIRELESS NETWORK THAT COMPRISES RANGE EXTENDERS**

(57)    Example embodiments describe a networking device (200) comprising means for performing: i) monitoring (201) routing of data packets between an access point, AP (106), and an associated device, STA (300), in a Wi-Fi network comprising range extenders, EXTs (300, 301, 302, 312); ii) detecting (202) when the routing oscillates; iii) determining (203) an EXT causing the oscillation as an affected EXT; and iv) instructing (204) to relocate the affected EXT.

Fig. 3

**Description**

**Technical Field**

Various example embodiments relate to the optimization of a wireless network comprising multiple range extenders.

**Background**

As the demand for wireless networks, Wi-Fi, availability grows, wireless networks are gaining momentum as a solution for coverage and congestion issues. A Wi-Fi network usually comprises one or more access points, APs, multiple range extenders, EXTs, and multiple associated devices, STAs.
When in such a Wi-Fi network a STA communicates with an AP, data packets are exchanged and routed over one or more EXTs, thereby following a routing path.

**Summary**

Amongst others, it is an object to provide a solution that improves the routing of data packets between an AP and a STA over intermediate EXTs in a Wi-Fi network.
This object is achieved, according to a first example aspect of the present disclosure by a networking device comprising means for performing i) monitoring routing of data packets between an AP and a STA in a Wi-Fi network comprising EXTs; and ii) detecting when the routing oscillates; and iii) determining an EXT causing the oscillation as an affected EXT; and iv) instructing to relocate the affected EXT.
In other words, data packets originating from a STA are transmitted over a multitude of EXTs to the AP in a Wi-Fi network. Reversely, data packets may also originate form the AP and are transmitted to the STA over the multitude of EXTs. When the AP and the STA are exchanging data packets over the EXTs, a routing path is followed. The networking device comprises means for monitoring the routing of data packets between the AP and the STA, thus over the routing path. Next, the networking device may detect an oscillation of the routing, that is, when the routing path changes from time to time, i.e. at least once during a certain time interval. Subsequently, the networking device may determine an EXT causing the oscillation of the routing and is nominated as an affected EXT. Finally, the networking device instructs to relocate the affected EXT.
The affected EXT may not forward data packets to a neighbouring EXT in a first occurrence due to, for example, the presence of interference, and consequently resend the data packets to the initial sender. The data packets are then, in this first occurrence, rerouted through another path, a first routing path. In a second occurrence, the interference effect may be absent, such that the affected EXT may forward data packets to its neighbouring EXT. In the second occurrence, a second routing path is thus followed by the data packets. When the data packets are routed in an oscillated way, for example, in a first occurrence through the first routing path, and in a second occurrence through the second routing path, an oscillation is present in the Wi-Fi network.
Since an oscillation in a routing of data packets is an unstable state of the Wi-Fi network, the routing of data packets is not performed in an efficient way. It is therefore an advantage that, firstly, the affected EXT is detected and, secondly, that the networking device instructs to relocate the affected EXT. In this way, a substantiated intervention may be taken to improve the routing of the data packets, and thus thereby improving the working condition of the Wi-Fi network. Advantageously, by relocating the affected EXT, thus the EXT causing the oscillation, the interference is resolved, and the Wi-Fi network may converge to a stable state, namely to a state wherein no oscillation is present.
According to an example embodiment, the means of the networking device are further configured to perform: v) identifying a rerouting EXT alternately routing data packets through a first and a second group of the EXTs.
A rerouting EXT is an EXT which routes data packets in a first occurrence through the first group of EXTs, and in a second occurrence through the second group of EXTs. It is thus an EXT that is common to both groups, but due to the affected EXT, the rerouting EXT needs to reroute data packets to let communicate the AP with a STA. Differently formulated, the rerouting EXT is the EXT changing the routing path from time to time, yet it is not per se the source of the oscillation.
At the rerouting EXT, there may also be more than two alternative routes through which incoming data packets may be forwarded to.
By identifying the rerouting EXT, the oscillation may be detected more efficiently. For example, by registering a number of alternations at the rerouting EXT during a predefined time interval, a threshold may be defined which has to be exceeded to detect an oscillation. This threshold may be dependent on the environment of the Wi-Fi network, on the number of EXTs, but also on a desired accuracy to detect an oscillation.
According to a further example embodiment, the detecting further comprises: vi) sending from the rerouting EXT sense-trigger data packets to EXTs of the first and/or the second group; and vii) receiving in reply sense-response data packets; and viii) determining therefrom interference rates at the respective EXTs; and wherein the determining of the affected EXT is based on the interference rates.

The rerouting EXT receives data packets and routes the data packets either through the first routing path, or through the second routing path, i.e. as initially intended. Simultaneously or instantly after the forwarding of the data packets, additional data packets, namely the sense-trigger data packets, are forwarded to the first and/or second routing path, and more particular to EXTs thereof. The sense-trigger data packets are thus routed through the path that the initial data packets are routed through, and supplementary through the alternative route when an oscillation is present. The EXTs in the routing path receive these sense-trigger data packets and forward them to the next EXT in the path. Furthermore, an EXT receiving such a sense-trigger data packet replies on it with a sense-response data packet and sends the sense-response data packet to the original sender of the sense-trigger data packet, thus back to the rerouting EXT. Alternatively, the replied sense-response data packets may be collected at the networking device. Nevertheless, the receive sense-response data packets are analysed and based thereon, interference rates are determined at the EXTs which replied on a sense-trigger data packet with a sense response data packet. Finally, based on the interference rates, the affected EXT is determined.

In this way, different routing paths may be mapped and analysed by the networking device, even those which are at the moment of the analysis not used as a routing path. Furthermore, by deriving and analyzing interference rates, an EXT having the worst interference rate, thus that one which suffers the most from interference, is identified as the affected EXT. Therefore, when several EXTs may be identified as an affected EXT, the one having the highest impact on the oscillation is determined, and the instruction to relocation this affected EXT has the most efficient impact on minimizing the oscillation.

According to an example embodiment, the sense-trigger data packets and/or the sense-response data packets comprise CSMA/CA data.

CSMA/CA or carrier-sense multiple access with collision avoidance is a multiple access method which avoids collisions by transmitting only when the channel is sensed to be idle. Thus, the sense-trigger data packets and/or sense-response data packets, when comprising CSMA/CA data, will have a minimal impact on the functioning of the network.

According to an example embodiment, the means of the networking device are further configured to perform: ix) storing interference rates during a predefined time interval covering an interval before and after the relocation of the affected EXT; and x) deriving therefrom a success rate of the relocation; and xi) reporting the success rate.

The interference rates determined by analysing sense-response data packets, whether comprising CSMA/CA data or not, are, for example, stored in a database, or in an internal memory of the networking device. For a predefined time-interval, the interference rates are collected, whereby an interval prior to the relocation of the affected EXT is covered, and an interval after the relocation of the affected EXT. The interference rates may further be grouped per EXT, or per group of EXTs covering a certain area, of even per EXTs covering a routing path. Next, since the stored interference rates cover a time-interval wherein the affected EXT is relocated, a success rate is derived therefrom. This success rate is thus indicative on the success or impact on the relocation of the affected EXT.

In this way, a response is given whether the relocation of the affected EXT is successful based on monitored data or not. Furthermore, by adapting the predefined time interval wherein interference rates are stored and wherefrom a success rate is derived, a balance may be made between either a high accuracy, either a fast feedback given on the relocation action.

According to an example embodiment, the deriving of the success rate further comprises performing a reinforcement learning algorithm.

A reinforcement learning algorithm may be used to derive a success rate without having a mathematical model of the environment. The success rate is derived by the algorithm based on a cumulative reward, and thus, advantageously, may easily be used to optimize the Wi-Fi network, i.e. deriving the success rate, without having an in-depth knowledge of the Wi-Fi network.

According to an example embodiment, the reinforcement algorithm comprises a q-learning algorithm, the q-algorithm performing: i) determining for the EXTs of the first and second group a sense-trigger value indicative for a respective EXT's repeatability; and ii) determining a relocatability-metric for a respective EXT based on the sense-trigger value and a q-value of the q-learning algorithm associated with the respective EXT; and when the affected EXT is relocated: iii) updating the q-value based on the success rate.

The q-learning algorithm first determines for the EXTs of the first and second group a sense-trigger value. This sense-trigger value is, for example, a number of times an EXT suffers from interference during a predefined time interval when a respective routing path is followed. This sense-trigger value is thus indicative for a respective EXT's relocatability, namely the higher the sense-trigger value, the more likely the respective EXT needs to be relocated to minimize the interference. Next, based on the sense-trigger value and a q-value of the q-learning algorithm, a relocatability metric is determined. The q-value takes into account a learning rate and a reward. Finally, the q-value is updated after the relocation of the affected EXT based on the success rate. Thus, when the algorithm is repeated in a next loop, a more accurate q-value may be used in order to determine the relocatability-metric.

By using a q-learning algorithm, a learning rate and expected reward is integrated in the reinforcement algorithm, such that a derivation of a success rate is also based on a prior determination thereof, thereby improving the accuracy of the derivation of success rates.

According to an example embodiment, the affected EXT is an EXT having the best relocatability-metric.

The reinforcement learning algorithm comprising the q-learning algorithm may thus, besides an improved determination of success rates, be used to determine the affected EXT. In this way, a more accurate determination of the affected EXT is obtained, while initially, the determination may be initiated based on, for example, interference rates.

According to an example embodiment, the instructing to relocate the affected EXT is performed through a message on a STA.

The message comprises, for example, an identification of the affected EXT and/or a position within the Wi-Fi network. This message is displayed on the STA, for example, in a text message, or by a picture representing a configuration of the Wi-Fi network and indicating the affected EXT. This way, a user may be informed in a straightforward manner when an oscillation occurs in the Wi-Fi network and which proper actions that needs to be taken in order to solve this.

According to an example embodiment, the instruction to relocate the affected EXT is performed through a message on the affected EXT.

Thus, alternatively, the instruction to relocate may also by given on the affected EXT itself. This may be performed, for example, by a LED indicator on the STA or another display, or even by an audio-signal. This way, the affected EXT may immediately by identified, especially when a large number of EXTs are present in the Wi-Fi network.

According to an example embodiment the means of the networking device comprises at least one processor, and at least one memory including computer program code, the at least one memory and computer program code configured to, with the at least one processor, cause the performance of the networking device.

According to a second example aspect, a method is disclosed comprising: i) monitoring routing of data packets between an AP and a STA in a Wi-Fi network comprising EXTs; and ii) detecting when the routing oscillates; and iii) determining an EXT causing the oscillation as an affected EXT; and iv) instructing to relocate the affected EXT.

According to a third example aspect, a computer-readable medium comprising instructions which, when executed by a computer, cause the computer to carry out the method according to the second example aspect.

## Brief Description of the Drawings

Some example embodiments will now be described with reference to the accompanying drawings.

Fig. 1 illustrates an example embodiment of a Wi-Fi network; and

Fig. 2 illustrates an example embodiment of a networking device for monitoring data packets; and

Fig. 3 illustrates an example embodiment of an oscillating effect in a first scenario; and

Fig. 4 illustrates an example embodiment of an oscillating effect in a second scenario; and

Fig. 5 illustrates an example embodiment of two routing paths for data packets; and

Fig. 6 illustrates an example embodiment of a decision flow for monitoring data packets;

Fig. 7 illustrates an example embodiment of a computing system for performing steps to monitor data packets.

## Detailed Description of Embodiment(s)

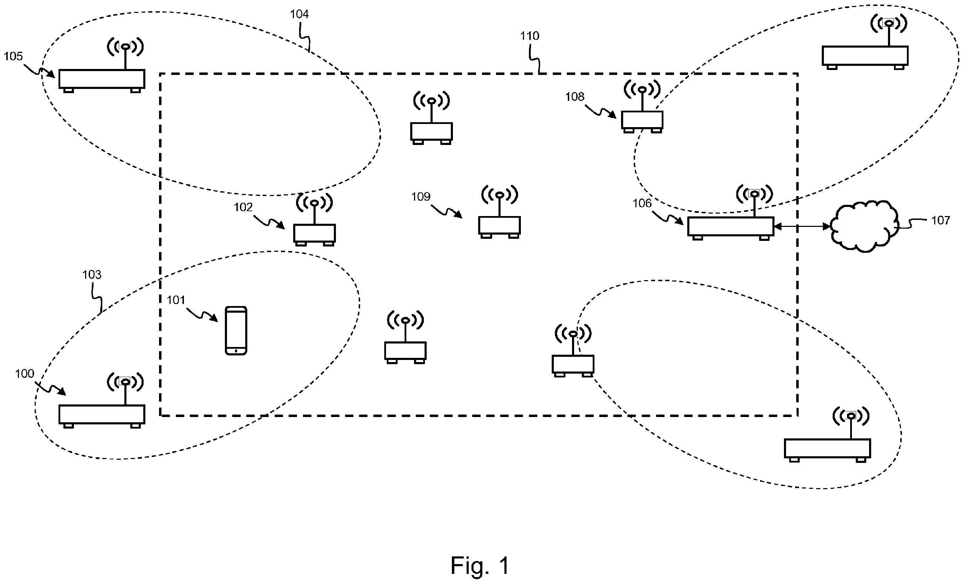

Fig. 1 illustrates an example embodiment of a Wi-Fi network comprising a multitude of access points, APs, such as AP 100, AP 105, and AP 106. The illustrated example embodiment of the Wi-Fi network further comprises a multitude of range extenders, EXTs, such as EXT 102, EXT 108, and EXT 109. Fig. 1 further illustrates an example embodiment of an associated device, STA 101. In this example embodiment, the STA 101 is associated to the AP 106, which on its behalf is connected to an external network 107, such as, for example, the Internet. The range of the AP 106 is extended through the use of EXTs and is illustrated by boundary 110. The STA 101 associated with AP 106 and located within the network boundary of the AP 106, communicates with the AP 106 by routing data packets over one or more EXTs. At the same time, other APs in the illustrated Wi-Fi network may also be active, thereby having a corresponding network range. The corresponding network range of AP 100 is illustrated by range 103, and the corresponding network range of AP 105 is illustrated by range 104. As illustrated by this example embodiment, the ranges of the different APs in the Wi-Fi network may interfere with each other. This means that the ranges may overlap with each other, as illustrated by the ranges 103, 104, and 110. When the STA 101 communicates with the AP 106, this communication may suffer from interference originating from the other APs operating in the Wi-Fi network. Furthermore, the STA 101 in this example embodiment, may not communicate directly with the AP 106, but through a number of EXTs through a routing path. Such a routing path may then also be influenced by interference from other APs.

Interference originating from APs may also vary in time, meaning that the interference may be present during a first time period, then may be absent during a second time period, and again may be present afterwards. A routing path between the STA 101 and the AP 106 may therefore be influenced by the varying presence of interferences of other APs, such as AP 100 and AP 105. Because of this, a routing path will also vary in time, meaning that a first group of EXTs are used in a first scenario for exchanging data packets between the STA 101 and AP 106, and a second group of EXTs in a second scenario. These two scenarios differ from the presence of interference. The effect that the routing changes from time to time is called route oscillation, or route flapping.

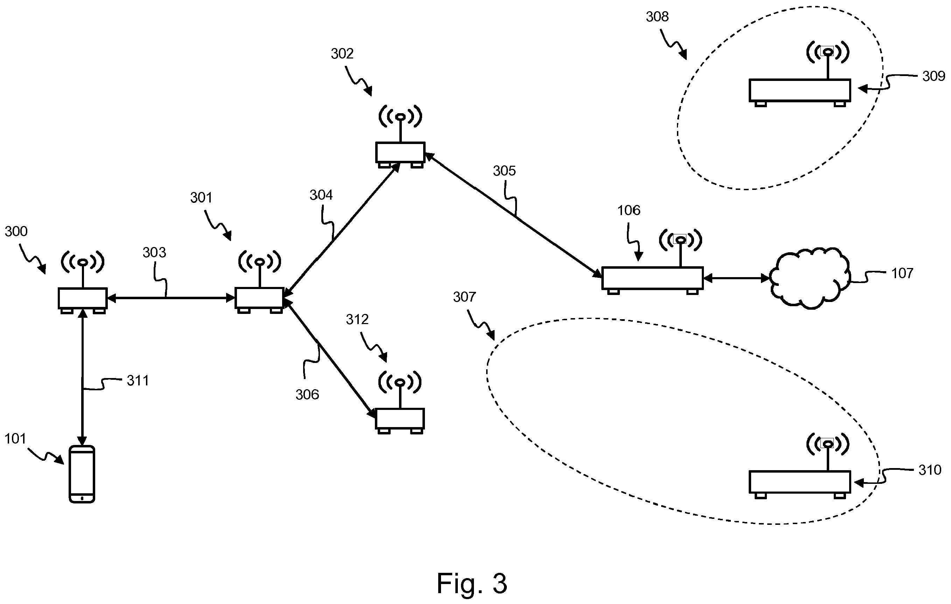

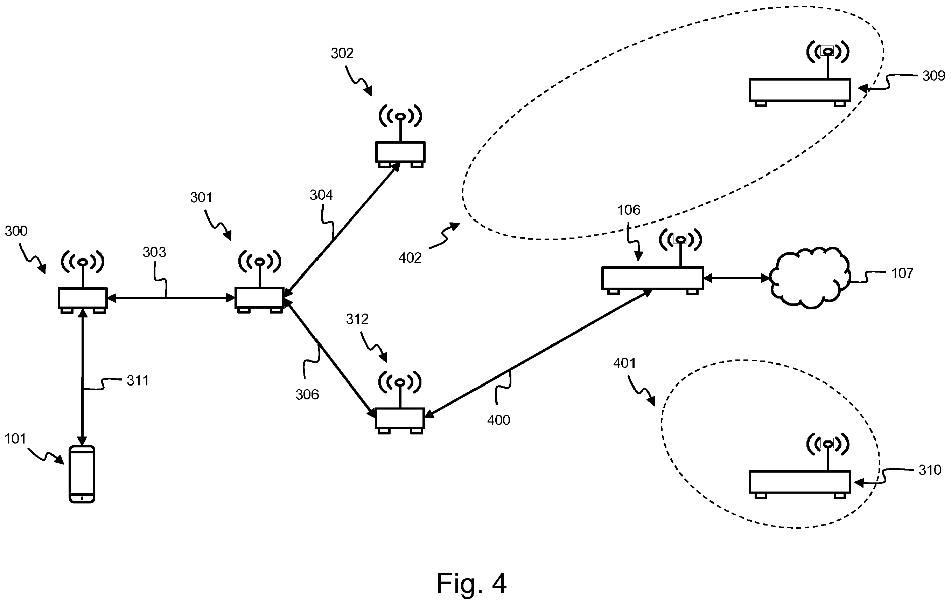

Example embodiments of such scenarios are illustrated Fig. 3, respectively in Fig. 4. In both scenarios, the STA 101 communicates with the AP 106 through a group of EXTs. In the Wi-Fi network illustrated in Fig. 3 and Fig. 4 two other APs than AP 106 are present as well, namely AP 309 and AP 310.

In a first scenario, as illustrated in Fig. 3, the STA 101 communicates, i.e. exchanging data packets, with the AP 106 through the EXT 300, EXT 301, and EXT 302. The communication between STA 101 and AP 106 occurs through wireless communications links 311, 303, 304, and 305. In the example scenario, EXT 301 may communicate with EXT 312, yet the related communication link 306 between the EXT 301 and EXT 312 is not used the STA 101 and AP 106 to exchange data packets. In other words, communication link 306 is not part of the routing path in this first scenario.

In a second scenario, as illustrated in Fig. 4, the STA 101 and the AP 106 communicate, i.e. change data packets, through another group of EXTs, namely EXT 300, EXT 301, and EXT 312. This means that, with respect to the first scenario, EXTs 300 and 301 are in common, while EXT 312 differentiates from EXT 302. The communication in the second scenario is performed through wireless communication links 311, 303, 306, and 400. In other words, another routing path is followed compared to the first scenario illustrated in Fig. 3.

The routing path in the first scenario, illustrated in Fig. 3, differentiates from the routing path in the second scenario, illustrated in Fig. 4, due to a different presence of interferences from APs 309 and 310. In the first scenario, the range 308 of AP 309 does not interfere with a communication link between EXT 302 and AP 106, i.e. the EXT 302 may communicate with the AP 106 through the communication link 305. At the same time, in this first scenario, the range 307 of AP 310 interferes with a possible communication link between the EXT 312 and the AP 106, i.e. no efficient wireless communication link between EXT 312 and AP 106 may be set up. In the first scenario, data packets will thus be exchanged through a routing path comprises a link between EXT 302 and AP 106, i.e. communication link 305, and avoid a path via a communication link between EXT 312 and AP 106 due to the presence of interference originating from the range 307 of AP 310.

The routing path in the second scenario, illustrated in Fig. 4, comprises, in contrast to the first scenario, a communication link between the EXT 312 and the AP 106, and no communication link between the EXT 302 and AP 106. In other words, in the second scenario, the routing path comprises communication links 311, 303, 306, and 400. In this second scenario, the range of AP 309 is now extended to range 402, which interferes with a communication between EXT 302 and AP 106, and the range of AP 310 is now reduced to range 401, which does not interfere with a communication link between EXT 312 and AP 106.

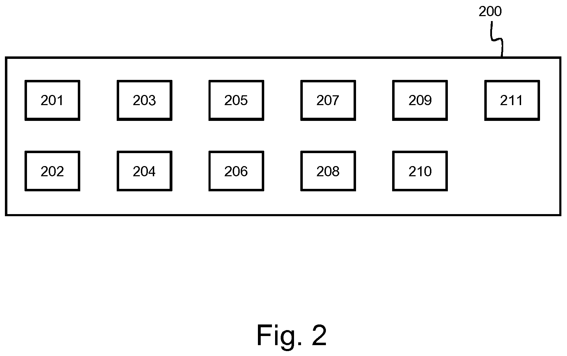

When the ranges of AP 309 and AP 310 change from time to time, thus, for example, from the first scenario illustrated in Fig. 3 to the second scenario illustrated in Fig. 4, and vice versa, the routing path between the STA 101 and the AP 106 will also change from time to time resulting in an oscillation. Since such an oscillation is an unstable state, according to an example embodiment a networking device comprises means for monitoring a routing of data packets and to instruct adequate interventions to solve the unstable state. In Fig. 2 an example embodiment of such a networking device is illustrated.

The networking device 200 illustrated in Fig. 2 comprises means for performing monitoring 201 a routing of data packets between the STA 101 and the AP 106. Next, the networking device 200 comprises means for detecting 202 an oscillation, means for determining 203 an EXT causing the oscillation, and means for instructing 204 to relocate the EXT causing the oscillation. This latter EXT may also be nominated as the affected EXT. The networking device 200 may further comprises means for identifying 205 a rerouting EXT which alternately routes data packets through a first and second group of EXTs. Referring to the example illustration of the first and second scenario illustrated in Fig. 3 respectively Fig. 4, such a rerouting EXT is, in this example illustration, EXT 301.

The networking device 200 may further comprises means for sending 206 from the rerouting EXT sense-trigger data packets to EXTs of the first and second group of EXTs. Again, referring to the example illustration of the first and second scenario illustrated in Fig. 3 respectively Fig. 4, the EXT 301 may send sense-trigger data packets to EXT 302 and EXT 312. These EXTs 302 and 312 may send in reply to this sense-trigger data packets, sense-response data packets to the rerouting EXT 301. The networking device 200 may further comprise means to receiving 207 these replied sense-response data packets. The networking device 200 may further comprise means for determining 208 therefrom interference rates at the respective EXTs, thus at EXT 302 and 312.

According to an example embodiment, the networking device 200 may further comprise means to perform storing 209 interference rates during a predefined time interval covering an interval before and after the relocation of the EXT causing the oscillation, deriving 210 therefrom a success rate of the relocation of the EXT causing the oscillation, and reporting 211 the success rate.

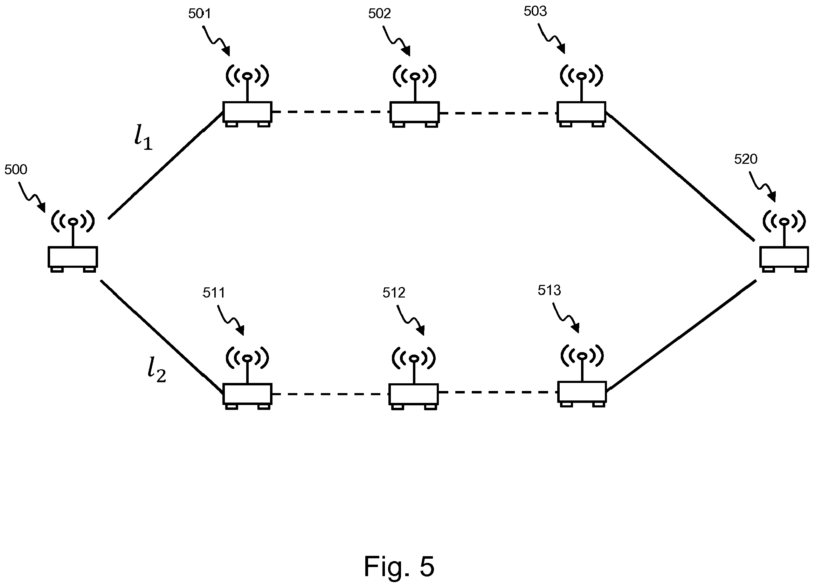

Steps performed by the means of the networking device 200 for monitoring data packets will now be illustrated with reference to Fig. 5 wherein two alternative routing paths are illustrated.

In Fig. 5 EXTs are illustrated through which data packets may be routed. In this illustrative example, a data packet may be routing from EXT 500 over EXTs 501, 502, and 503 to EXT 520. This routing path is nominated as route $l_1$. Another routing path may be from EXT 500 over EXT 511, 512 and 513 to 520 and is nominated as $l_2$.

In a first step, for data packets routed from EXT 500 to EXT 520 it is stored which routing path is followed, namely $l_1$ or $l_2$. The selected routing path may, for example, be stored as a binary value, for example, zero when $l_1$ is selected as a routing path and one when $l_2$ is selected as a routing path.

In a second step, a pattern of oscillation between the different routing paths, thus for $l_1$ and $l_2$, is identified. The accumulated number of chosen routing paths is defined as $N$, the number of times $l_1$ is selected as routing path is defined as $N_1$, and the number of times $l_2$ is selected as routing path is defined as $N_2$. In other words, $N = N_1 + N_2$. By evaluating the following expression:

$$E \equiv \left( \lim_{N \to N_{thresh}} \frac{\max(N_1, N_2)}{N} < R_{thresh} \right) \qquad \text{(Eq. 1)}$$

an identification is made of a routing oscillation. If $E$ evaluates to positive, a positive identification of a routing oscillation is made. When there is no routing instability, then $R_{thresh} = 1$ as $N_{thresh} \to \infty$. The larger the value of $N_{thresh}$, the higher the accuracy of an oscillation detection, yet the larger the time is required to detect an oscillation. A balance will thus be made between accuracy and the time needed for detecting an oscillation, which may be dependent on the requirements and the set-up of the Wi-Fi network. A value of $R_{thresh}$ may also be determined by making a balance between accuracy, requirements and set-up of the Wi-Fi network and time.

In a third step, for each consecutive routing of data packets, for example, incoming at EXT 500 and forwarded to EXT 520, data packets are routed according to an initial routing protocol, thus either via $l_1$ or $l_2$. Subsequently, additional data packets, namely the sense-trigger data packets are immediately after the initial data packets forwarded to EXT 520 via, on the one hand routing path $l_1$, and on the other hand via routing path $l_2$. When the EXTs of the respective routing path receive the sense-trigger data packets, these data packets are routed forward in the path, thus towards EXT 520. Furthermore, also CSMA/CA data is collected during the routing. This data comprises information about possible interference at each intermediate EXT. Each of the EXT along the routing path encodes this data into a sense-response data packet and sends this back to the originator of the sense-trigger data packets, thus in this example to EXT 500.

In a fourth step, at EXT 500 or by the networking device 200, the sense-response data packets are analysed and for the EXTs in the routing paths, interference rates are derived therefrom.

In a fifth step, the data at EXT 500 or at the networking device 200 is collected over several subsequent routing decisions.

In a sixth step, the data collected in the fifth step is analysed and examined, i.e. it is determined if there are EXTs that oscillate between having interference and having no interference when either routing path $l_1$ and routing path $l_2$ is selected. Based on this analyse, an EXT which has the highest possibility of being the cause of an oscillation is identified.

This identification may be performed using a reinforcement learning algorithm which may, for example, further comprise a q-learning algorithm. For each sense-trigger event, i.e. a response to a sense-trigger data packet, a sense-trigger entry is created and stored in a knowledge base by using data from corresponding sense-response packets that are received. If there are, for example, $p$ intermediate EXTs, an entry may be represented as a binary $p + 1$-tuple, or for example e = {0,1,0,1,0,0, ...,1,0,1}. When, for example, e[0] = 1, a routing decision corresponds to $l_1$, and when e[0] = 0, it corresponds to $l_2$. When $e[i] = 1$ for $i > 0$, the intermediate EXT $i$ is interfered and when $e[i] = 0$, the intermediate EXT $i$ is not interfered.

Next, by analyzing the sense-trigger entries in the knowledge base, a number of entries wherein the i-th EXT is interfered when $l_1$ is selected is calculated as $f_{l_1,i}$, and a number of entries wherein the $i$-th EXT is interfered when $l_2$ is selected is calculated as $f_{l_2,i}$. Next, be defining:

$$S_i = \left(\frac{f_{l_1,i}}{n_{l_1}} - \frac{f_{l_2,i}}{n_{l_2}}\right)^2 \qquad\qquad \text{(Eq. 2)}$$

wherein $n_{l_1}$ and $n_{l_2}$ are respectively the number of sense-trigger entries made for $l_1$ and $l_2$, a relocatability metric $M_i$ may defined as:

$$M_i = \beta S_i + (1-\beta)Q_i \; ; 0 < \beta < 1 \qquad\qquad \text{(Eq. 3)}$$

wherein $\beta$ is a value that depends on the set up of the Wi-Fi network and may be experimentally be determined. $Q_i$ is a q-value of the q-learning algorithm and associated with the i-th intermediate EXT $N_i$.

For a highly relocatable EXT, one has $\left\{\frac{f_{l_1,i}}{n_{l_1}} = 0, \frac{f_{l_2,i}}{n_{l_2}} = 1\right\}$ or $\left\{\frac{f_{l_1,i}}{n_{l_1}} = 1, \frac{f_{l_2,i}}{n_{l_2}} = 0\right\}$.

After the relocation of the affected STA, an assessment is made whether this relocation is successful or not, i.e. if the relocation had any effect on the oscillation. After a $j$-th try in the oscillation avoidance process, the q-value for EXT $N_i$ is updated as follows:

$$Q(N_i, j) = Q(N_i, j-1) + \alpha\{r_j - Q(N_i, j-1)\} \qquad\qquad \text{(Eq. 4)}$$

wherein $\alpha$ is a scalability factor and $r_j$ is the reward of the q-learning algorithm. Thus, if $r_j > 0$ when the throughput at EXT 520 is increased after the relocation of the affected EXT, and $r_j < 0$ if it is decreased or stays the same. The values of $\alpha$ and $r_j$ may be dependent on the configuration of the Wi-Fi network, and may be experimentally be determined.

The q-value update logic may, for example, be performed through the following algorithm:

**Input:**

Set of Q-values: $Q = \{Q_i\}_{i=1}^n$

Set of throughput values before and after relocation $T_b = \{T\}_{i=1}^n, T_a = \{T\}_{i=1}^n$

$j$ = Relocated EXT

**Pseudocode:**

```
1) Set r = 0
2) if Ta[j] > Tb[j]
3) Set r > 0
4) else if Ta[j] < Tb[j]
5) Set r > 0
6) Qj = Qj + α* (r - Qj)
```

The reinforcement learning algorithm may then identify an EXT having the highest relocatability metric $M_i(M_{max})$, provided that $M_{max} > M_{thresh}$, where $M_{thresh}$ is a threshold depending on the configuration of the Wi-Fi network and may be experimentally be determined.

The reinforcement algorithm may, for example, be performed through the following algorithm:

**Input:**

Set of Q-values: $Q = \{Q_i\}_{i=1}^{n}$

Set of *sense-trigger entries:* $E = \{e_i\}_{i=1}^{p+1}$

**Pseudocode:**

Step 0:

1) Set $Q_i = 0 \forall \{i \in Z^+ : 1 \leq i \leq n\}$

Step 1:

2) Set $f_1 = \{0\}_{i=1}^{n}$, $f_2 = \{0\}_{i=1}^{n}$
3) Set $n_{l_1} = 0, n_{l_2} = 0$
4) for all $\{i \in Z^+ : 1 \leq i \leq p + 1$
5) for all $\{j \in Z^+ : 1 \leq j \leq n\}$
6) if $e_i[1] = 0$ then $f_1[j] = f_1[j] + 1$, $n_{l_1} = n_{l_1} + 1$
7) if $e_i[1] = 1$ then $f_2[j] = f_2[j] + 1$, $n_{l_2} = n_{l_2} + 1$
Step 2:

8) for all $\{i \in Z^+ : 1 \leq i \leq n\}$
9) $S[i] = ((f_1[i]/n_{l_1}) - (f_2[i]/n_{l_2}))$ ^2

Step 3:

10) for all $\{i \in Z^+: 1 \leq i \leq n\}$
11) $M[i] = \beta * S[i] + (1-\beta) * Q_i$

Step 4:

12) $M_{max} = \max(M_i)$ where $i$ is such that $\{i \in Z^+ : 1 \leq i \leq n\}$
13) If $M_j = M_{max}$ for some $j \in \{i \in Z^+ : 1 \leq i \leq n\}$ , then select one such $j$ randomly
14) If $M_{max} > M_{thresh}$ notify user about relocating *EXT j* selected in step 13 above.

A notification of a relocation of the affected EXT may be done via a LED indicator on an EXT and/or through an audio or posting message on a STA, such as a smartphone or a smart TV.

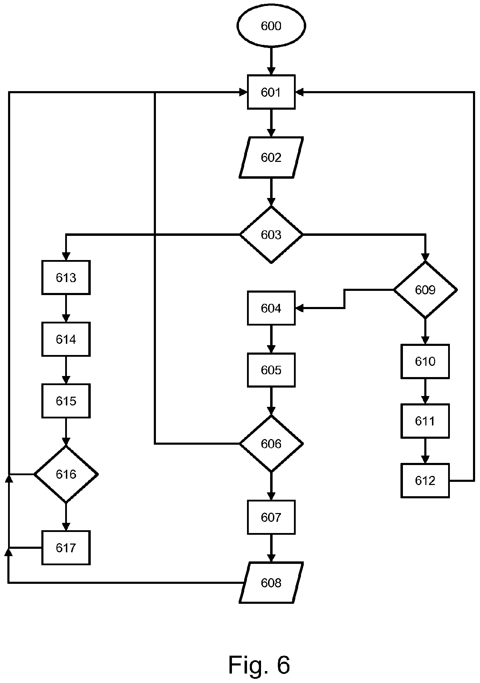

In Fig. 6 another illustration of the decision flow is given illustrating the different steps discussed in the above paragraphs. At the start 600, first incoming packets are waited for 601. When there is an incoming packet 602, it is determined if the incoming packet is a data packet in decision node 603. If the packet is a data packet, the decision tree continues to 613, otherwise it continues to decision node 609.

In 613 a routing decision is made, the knowledge base is updated 614 by the decision 613, and a past routing decisions in the knowledge base are analysed 615. When there is a pattern of oscillation, determined in decision node 616, a sense-trigger packet through each candidate outgoing link is send 617. Otherwise, when no pattern of oscillation is determined in decision node 616, the decision tree goes back to 601.

When in the decision node 603 an incoming packet is not a data packet, the decision tree continues to decision node 609. There it is examined 609 if the packet is a sense-response packet. If not, it is a sense-trigger packet and the decision tree continues to 610. In 610 CSMA/CA data is gathered 610, a routing decision is made 611 and a sense-response packet is send 612 to the sense-trigger originator with CSMA/CA data. Again, the decision tree goes back to 601.

If the packets is a sense-response packet in 609, interfered EXTs are marked 604 and the reinforcement learning algorithm updates the knowledge base 604. Next, an analyse of past interference in the knowledge base is made 605. If, next, there are relocatable EXTs, decided in 606, possible EXTs for relocation are identified 607. Finally, a notification is given of the affected EXT 608.

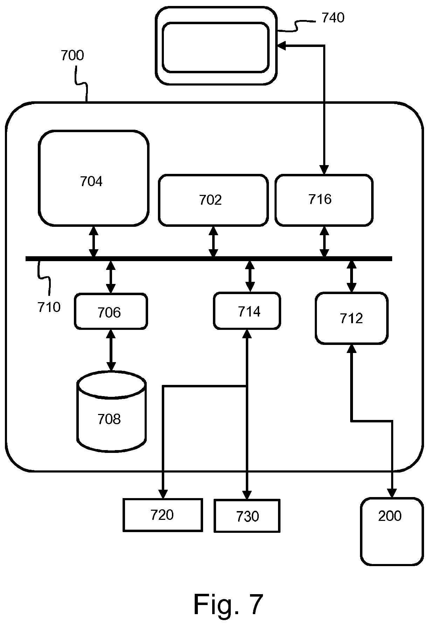

Fig. 7 shows a suitable computing system 700 according to an example embodiment. Computing system 700 comprises means for performing the steps according to the above example embodiments. Computing system 700 may therefore be used as suitable implementation of networking device 200. Computing system 700 may in general be formed as a suitable general-purpose computer and comprise a bus 710, a processor 702, a local memory 704, one or more optional input interfaces 714, one or more optional output interfaces 716, a communication interface 712, storage element interface 706 and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator to input information to the computing device 700, such as a keyboard 720, a mouse 730, a pen, voice recognition and/or biometric mechanisms, etc. Output interface 716 may comprise one or more conventional mechanisms that output information to the operator, such as a display 740, etc. Communication interface 712 may comprise any transceiver-like mechanism such as for example one or more Ethernet interfaces that enables computing system 700 to communicate with other devices and/or systems. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... may be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A networking device (200) comprising means for performing:

    - monitoring (201) routing of data packets between an access point (106), AP, and an associated device (101), STA, in a Wi-Fi network comprising range extenders (300, 301, 302, 312), EXTs;
    - detecting (202) when the routing oscillates;
    - determining (203) an EXT causing the oscillation as an affected EXT; and
    - instructing (204) to relocate the affected EXT.

2. The networking device (200) of claim 1 wherein the means are further configured to perform:

    - identifying (205) a rerouting EXT (301) alternately routing data packets through a first and second group of the EXTs.

3. The networking device (200) of claim 2 wherein the detecting further comprises:

    - sending (206) from the rerouting EXT sense-trigger data packets to EXTs of the first and/or the second group;

- receiving (207) in reply sense-response data packets; and
- determining (208) therefrom interference rates at the respective EXTs;

and wherein the determining of the affected EXT is based on the interference rates.

4. The networking device (200) of claim 3 wherein the sense-trigger data packets and/or the sense-response data packets comprise CSMA/CA data.

5. The networking device (200) of claim 4 wherein the means are further configured to perform:

- storing (209) interference rates during a predefined time interval covering an interval before and after the relocation of the affected EXT;
- deriving (210) therefrom a success rate of the relocation; and
- reporting (211) the success rate.

6. The networking device of claim 5 wherein the deriving of the success rate further comprises performing a reinforcement learning algorithm.

7. The networking device (200) of claim 6 wherein the reinforcement learning algorithm comprises a q-learning algorithm, the q-learning algorithm performing:

- determining for the EXTs of the first and second group a sense-trigger value indicative for a respective EXT's repeatability;
- determining a relocatability-metric for a respective EXT based on the sense-trigger value and a q-value of the q-learning algorithm associated with the respective EXT;

and when the affected EXT is relocated:

- updating the q-value based on the success rate.

8. The networking device (200) of claim 7 wherein the affected EXT is an EXT having the best relocatability-metric.

9. The networking device (200) of any preceding claim wherein the instructing to relocate the affected EXT is performed through a message on a STA.

10. The networking device (200) of any preceding claim wherein the instructing to relocate the affected EXT is performed through a message on the affected EXT.

11. The networking device (200) of any preceding claim wherein the means comprises at least one processor; and at least one memory including computer program code, the at least one memory and computer program code configured to, with the at least one processor, cause the performance of the networking device.

12. A method comprising:

- monitoring routing of data packets between an access point, AP, and an associated device, STA, in a Wi-Fi network comprising range extenders, EXTs;
- detecting when the routing oscillates;
- determining an EXT causing the oscillation as an affected EXT; and
- instructing to relocate the affected EXT.

13. A computer readable medium comprising instructions which, when executed by a computer, cause the computer to carry out the method of claim 12.

Fig. 1

200

| | | | | | 211 |
|---|---|---|---|---|---|

201  203  205  207  209

202  204  206  208  210

Fig. 2

Fig. 3

Fig. 4

14

Fig. 5

Fig. 6

Fig. 7

Europäisches
Patentamt

European
Patent Office

Office européen
des brevets

# EUROPEAN SEARCH REPORT

Application Number

EP 18 17 4137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/302096 A1 (CHARI AMALAVOYAL [US] ET AL) 13 October 2016 (2016-10-13) * paragraph [0026] - paragraph [0028]; figure 1 * * paragraph [0040] - paragraph [0085] * * paragraph [0109] - paragraph [0113] * * paragraph [0121] * | 1-13 | INV. H04W40/14 H04W40/16 H04W40/12 H04L12/707 H04L12/703 |
| X | US 9 705 747 B1 (XUE QI [US] ET AL) 11 July 2017 (2017-07-11) * column 12, line 24 - line 66; figures 5,14 * * column 27, line 33 - column 28, line 26 * | 1-13 | |
| A | US 2015/171953 A1 (DJUKIC PETAR [CA] ET AL) 18 June 2015 (2015-06-18) * paragraph [0030] - paragraph [0035] * | 1-13 | |

TECHNICAL FIELDS
SEARCHED (IPC)

H04L
H04W

The present search report has been drawn up for all claims

| Place of search | Date of completion of the search | Examiner |
|---|---|---|
| The Hague | 8 November 2018 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 17 4137

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2018

| Patent document cited in search report | | | Publication date | Patent family member(s) | | | Publication date |
|---|---|---|---|---|---|---|---|
| US 2016302096 | A1 | | 13-10-2016 | NONE | | | |
| US 9705747 | B1 | | 11-07-2017 | NONE | | | |
| US 2015171953 | A1 | | 18-06-2015 | CA | 2932968 | A1 | 18-06-2015 |
| | | | | CN | 105830401 | A | 03-08-2016 |
| | | | | EP | 3069483 | A1 | 21-09-2016 |
| | | | | JP | 6321177 | B2 | 09-05-2018 |
| | | | | JP | 2017505022 | A | 09-02-2017 |
| | | | | KR | 20160093672 | A | 08-08-2016 |
| | | | | RU | 2654128 | C1 | 16-05-2018 |
| | | | | US | 2015171953 | A1 | 18-06-2015 |
| | | | | WO | 2015085950 | A1 | 18-06-2015 |

EPO FORM P0459

For more details about this annex : see Official Journal of the European Patent Office, No. 12/82